# EUROPEAN PATENT APPLICATION

(11) **EP 2 849 059 A2**
(43) Date of publication of application: **18.03.2015**
(21) Application number: 14189129.1
(22) Date of filing: 28.03.2006
(51) Int. Cl.: G06F 9/44, G06T 13/00, H04L 12/58

(54) **Animation displaying method and system thereof**

(30) Priority: 02.06.2005 CN 200510075718; 02.06.2005 CN 200510075721; 09.09.2005 CN 200510102454
(62) Divisional of application: 06722176.2
(71) Applicant: Tencent Technology (Shenzhen) Company Limited, Shenzhen, Guangdong 518044 (CN)
(72) Inventor: Wang, Haibing, 518044 Shenzhen (CN); Guo, Bijian, 518044 Shenzhen (CN); Yang, Xiaohu, 518044 Shenzhen (CN); Mai, Song, 518044 Shenzhen (CN)
(74) Representative: Körber, Martin Hans

(57) **Abstract**

The present invention discloses a method for displaying animation and system thereof, which can implement an attachment of an action animation and a background animation. In the method, the action animation is moved accordingly when the background animation is moved; or the action animation is attached to the background animation after the action animation is moved out of the background animation for a while. In the present invention, a configuration file of the animation file can be set in an animation server, so that a client can download the configuration file from an animation server and display the animation file according to a trigger event and the configuration file. In the present invention, the music and the animation file can be played together, that is the performing of animations can be consistent with the playing of music. To sum up, the method and system in the present invention can display animations in more ways and with high quality.

## Description

### Field of the Invention

The present invention relates to image processing technology, more particularly to, a method for displaying animation and system thereof.

### Background of the Invention

With development of society and technology, image processing technology, especially animation display technology, has been widely used in intelligent devices, such as computer, mobile phone, personal digital assistant and so on, which greatly enriches people's work, study and daily life. There are three animation display techniques applied in intelligent devices in the prior art.

The first animation display technique in the prior art is described hereafter. The intelligent devices (such as computers) usually implement animation display by a Flash animation. For example, a virtual pet game running on user's personal computer can be controlled by a computer program. The computer program depicts pet's life by controlling the playing of Flash animation, so the user can experience a vivid virtual pet on the computer. Upon being transparentized, the pet's Flash animation can be displayed at any position of the user's computer desktop.

The specific processes of transparentizing the pet's Flash animation are as follows. When the computer program is running, a container window (window A) is created, and a Flash control window (window B) is created by taking window A as the container. The Flash control window provides a SetBkColor interface for setting the Flash animation's background color. For example, the Flash animation's background color may be set as RGB (82, 81, 82) by calling the SetBkColor interface. When the Flash animation is playing, the Flash's GetFrameNum function is repeatedly called by polling time slice, then a current frame number of the Flash animation can be obtained. Once the frame number changes, which means that the image contents are changed, so a WM_PAINT message is sent to window B through a SendMessage interface in Win32 API. And by taking a CDC temporarily created as parameter, image contents of window B (i.e. Flash control window) can be obtained. The obtained image contents are analyzed, and an RGN object can be constructed for non-background color image contents. A SetWindowRgn function is called to apply the RGN object in window A, and the background of the Flash control window is transparentized.

Disadvantage of the first animation display technique is as follows. Although the Flash animation is transparentized, the Flash animation is still presented flatly, and no further experience of existing Flash animation presentation can be added, so that presentation of the Flash animation is of poor quality.

The second animation display technique in the prior art is described hereafter. Nowadays, Instant Messenger (IM) tools have been widely applied in intelligent devices (like computers). When IM tools implement instant communication, various individual virtual images can be represented by displaying animation. A user's desired actions can be represented and different animation actions can be carried out by processing animation files. The specific procedure of the IM client implementing the animation display is as follows. The IM client creates an animation file including a processing logic for animation actions, so IM client can detect the change of animation actions by reading feedback information in the processing logic and display the animation.

Disadvantage of the second animation display technique is as follows. The processing logic preset in the animation file can not be modified or adjusted optionally, which means displaying of the animation file is a fixed process. So the change of displaying of the animation file is just the change of the processing logic in practice. When the displaying of the animation file is changed, the animation file with corresponding processing logic has been created again. In this way, if the animation to be displayed has large numbers of actions and representations, adequate action feedbacks have to be added into the animation file's processing logic. So the animation file is huge, and the running speed of the animation file is excessively slowed down, and the flexibility of modifying the animation is also affected, the animation is depicted flatly and animation presenting quality is bad.

The third animation display technique in the prior art is described hereafter. At present, IM tools can provides online music service except the instant communication. The IM tools also can implement online virtual pet games by the animation technique. The online music service generally refers to the playing of music files via special player. The Windows Media Player and other players can implement an online order. Each online order media will obtain a Digital Right Management (DRM) certificate, which includes the times the media is authorized to play and other information. The virtual pet is a type of developing on-line entertainment game that is tightly combined with instant communication. In the game, the virtual pet can accomplish various performances and is presented on the laptop through the playing by the Flash various actions.

Disadvantage of the third animation display technique is as follows. When the player plays online music, there is usually no animation image, just a window of the player, going with the music. User enjoys the music mainly through ears, and the animation presentation is relatively flat and with low quality.

To sum up, the main disadvantages of existing animation techniques are flatness of the animation presentation and low quality of the animation presentation.

### Summary of the Invention

Therefore, the present invention provides a method for displaying animation and system thereof, so as to enrich ways of presenting animations and enhance the quality thereof.

A method for displaying animation includes the following processes:
if an action animation is not attached to a background animation, moving the action animation to make the action animation attached to the background animation after a preset period of time;
if the action animation is attached to the background animation, moving the action animation accordingly to keep position where the action animation is attached to the background animation unchanged when the background animation is moved.

Preferably, the moving the action animation accordingly to keep position where the action animation is attached to the background animation unchanged when the background animation is moved includes:
sending by the background animation a message to a upper hierarchy window;
figuring out by the upper hierarchy window a current position of the background animation according to the message; and
moving the action animation to keep the position where the action animation is attached to the background animation unchanged, according to the current position and the position where the action animation is attached to the background animation before the background animation is moved.

Preferably, the moving the action animation to make the action animation attached to the background animation includes: calling a window hide function to make an action animation window disappear; calling a window move function to move the action animation window to a position of a background animation window; and calling a window display function to display the action animation window.

Preferably, the method further comprises the following process: transparentizing the action animation and background animation.

Preferably, the method further comprises the following process: determining whether the action animation is attached to a background animation according to a position of action animation window, a position of animation background window position and a non-background area.

The present invention further discloses a method for displaying animation. The method includes the following processes:
setting an animation file and a configuration file separately;
downloading the configuration file;
displaying the animation file according to the configuration file and a trigger event.

Preferably, the configuration file includes a display processing logic for the animation file.

Preferably, the animation file is set in an animation display client and the configuration file is set in an animation server.

Preferably, the method further includes the process of: updating the configuration file; moreover, the downloading the configuration file includes: when the animation display client is starting, downloading from the animation server the latest configuration file to the animation display client.

Preferably, the latest configuration file is updated by the animation server according to various parameters in a previous running procedure of the animation file.

Preferably, the method further includes: determining by the animation display client whether there is any trigger event, if there is the trigger event, displaying the animation file according to the configuration file and a trigger event.

Preferably, status information of the trigger event includes: a position and status of the animation display client computer's mouse or cursor, or a computer program's running status of the animation display client.

Preferably, the method further includes the following processes: matching the trigger event with the animation file defined in the configuration file and, and displaying the animation file matched.

The present invention also discloses a system for displaying animation. The system includes: an animation server, including a processing module configured to control displaying of animation files; and an animation display client, configured to download the processing module from the animation server and display the animation files according to definition in the processing module and a trigger event.

Comparing with the prior arts, the above mentioned method and system of the present invention have the following beneficial effects.

In the first method for displaying animation, action animation and background animation are overlapped and attached. When the background animation is moved, the action animation can move with the background animation automatically. When the action animation leaves the background animation, the action animation can get back to the previous relative attaching position automatically. So the animation's individuation presenting and animation's presenting quality are improved. The first method can be applied especially in a solution for an alternative display of laptop virtual pet and the pet's home, however no laptop pet in prior art has the background animation like "pet's home" with the pet being a Flash animation format and the pet's home being a Gif animation format. Backgrounds of both the pet and the pet's home are transparentized and are overlapped, which can further improve the presenting manner of animations, add vitality to the virtual pet, and improve the presenting quality of the virtual pet animation.

In the second method for displaying animation and system thereof, a configuration file with animation file processing logic is set in an animation server. When the animation is displaying, an animation client can download the configuration file from the animation server. And the animation client displays the animation according to contents of the configuration file and current trigger conditions. When presentation of the animation file is changed, contents of the configuration file in animation server are changed without affecting the animation client's performance. In this way, adequate action feedbacks can be added to the configuration file and performance of the animation client can be guaranteed. Thus the flexibility of animation modification is increased, the presenting manner of animation and presenting quality of the animation are improved.

In the third animation display method and system thereof, the playing of online music and virtual pet animation are synchronized, that is, the virtual pet's performing actions are consistent with the music being played. The method and system thereof not only provide a new friendly experience of network music service, but also provide developing virtual games with ability of playing music. And in the method and system thereof, the animation's presenting manner and presenting quality can also be improved.

### Brief Description of the Drawings

Figure 1 is a diagram illustrating a virtual pet adopted by a first method for displaying animation of the present invention.
Figure 2 is a flowchart illustrating a procedure of an embodiment of the first method for displaying animation of the present invention.
Figure 3 is a flowchart illustrating a second method for displaying animation of the present invention.
Figure 4 is a diagram illustrating structure of a system for displaying animation of the present invention.
Figure 5 is a diagram illustrating structure of a network providing online music service and virtual pet games.
Figure 6 is a flowchart illustrating a third method for displaying animation of the present invention.
Figure 7 is a diagram illustrating structure of another animation display system of the present invention.
Figure 8 is a diagram illustrating the singing of the virtual pet in the present invention.

### Detailed Description of the Invention

The first method for displaying animation of the present invention implements a position interaction of action animation and background animation, that is, the presenting of an action animation window and a background animation window on the user's display device. The action animation window displays an action animation transparentized; the background animation window a background animation transparentized. A transparentizing process can be performed according to existing methods, which is not to be described in detail hereinafter.

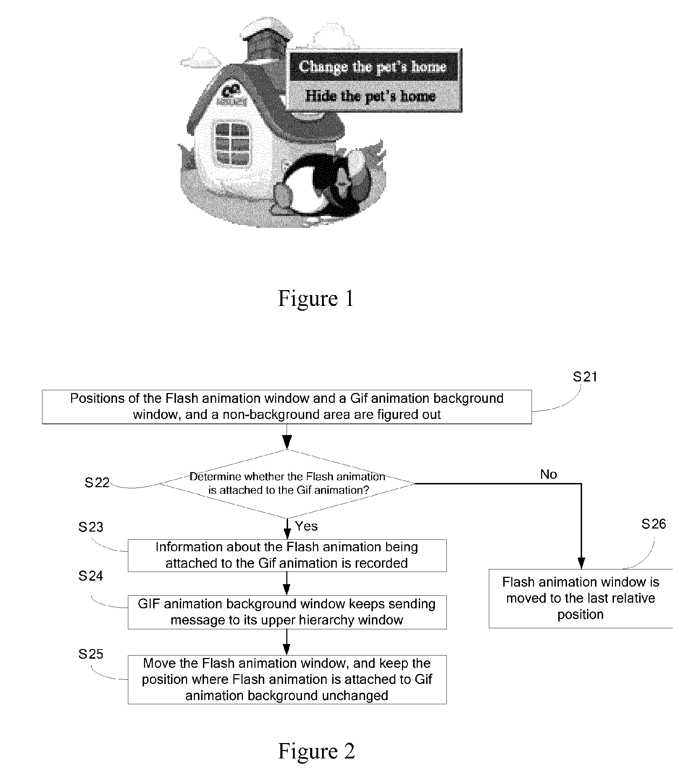

With reference to Figure 1, in an embodiment of the first method for displaying animation, Flash 100 overlaps Gif animation background 200, and both Flash 100 and Gif animation background 200 are transparentized. In another word, the action animation is Flash animation, and the background animation is Gif animation. This embodiment provides a method for making Flash animation transparently overlap Gif animation background, and performs the position interaction of Flash animation and Gif animation.

Figure 2 is a flowchart illustrating a procedure of an embodiment of the first method for displaying animation of the present invention. With reference to Figure 2, this procedure includes the following steps.

In S21, supposing that a user drags a Flash animation window with a mouse, when the user finishes dragging the Flash animation window, positions of the Flash animation window and a Gif animation background window, and a non-background area are figured out. The non-background area is a non-transparentized area of Flash animation and Gif animation.

In S22, according to the positions and the non-background area figured out in S21, the process of determining whether Flash animation and Gif animation overlap each other is performed, that is to determine whether the Flash animation is attached to the Gif animation; if yes, the processes in S23 are performed; otherwise, the processes in S26 are performed without any record.

In S23, information about the Flash animation being attached to the Gif animation is recorded.

In S24, when the Flash animation is attached to the Gif animation, if the user drags the Gif animation background window via the mouse, GIF animation background window keeps sending message to its upper hierarchy window.

In S25, the upper hierarchy window figures out a current position of the Gif animation background window according to the message, and moves the Flash animation window according to the current position and a position where the Flash animation is attached to the Gif animation background before the dragging. So the position where Flash animation is attached to Gif animation background can be kept unchanged, and the Flash animation window moves with the Gif animation background window when the user drags the Gif animation background.

In S26, the Flash animation and the Gif animation are not attached to each other, and after a stochastic period of time (alternatively, this period of time can be preset by the user and stored in the computer), the Flash animation window is moved to the last relative position where the Flash animation is attached to the Gif animation background window. For the user, once being dragged away from the Gif animation background, the Flash animation will return to the Gif animation background after a certain period of time.

One embodiment of the first method for displaying animation of the present invention is a laptop pet game, as shown in Figure 1. The transparentized pet action animation (the pet) 100 is directly attached on background animation (the pet's home) 200, and the pet (action animation) can perform various life actions at the pet's home (background animation).

The pet's action animation is the Flash animation presents the growing actions of the virtual pet. The background animation is the transparent Gif animation under the Flash animation.

In another word, the pet's home is a transparent background picture in GIF format that has the similar size as the pet, and presents on the user's laptop with the pet at the same time. With the above mentioned method of the present invention, when the user drags the pet above the pet's home, the pet will automatically be attached to picture of the pet's home. So when the user drags the pet's home, the pet moves with it accordingly.

When program of the pet is working, a complete action script, defining in detail a trigger condition and presenting Flash animation of the pet's each action, is called. When the pet is located at a position of the home's background picture, if the user needs to drag the pet's home, the program immediately calculates the position of the pet's home Gif background and then moves the pet Flash animation to the position where the Flash animation is attached to the Gif animation background, which implements an attachment between pet's home Gif animation and the Flash animation.

Besides, in the pet's action script, it can be programmed that, after the pet finishes an action, the pet client automatically determines whether the pet is already attached to the pet's home. If the pet is not attached to the pet's home, the pet client makes use of an "instant disappear" Flash action by calling a window hide function (that is ShowWindow(SW_HIDE)) to hide the pet's window and makes the pet disappear from the current position. Then the pet client calls a window move function (that is MoveWindow function) to move the pet's window to the pet's home, calls a window move function (ShowWindow(SW_SHOWNOACTIVE)) to display the pet's window and plays an "instant appear" Flash animation at the same time. After the pet is displayed, the pet will automatically be attached to the pet's home.

In the second method for displaying animation of the present invention, a configuration file for animation is set in an animation server. And a display processing logic corresponding to the animation is set and stored in the configuration file, that is, the display processing logic for controlling animation action is stored in the animation server but not in the client. So, the animation server can automatically modify and adjust the configuration file, and the animation can be displayed intelligently with flexibility and in various ways.

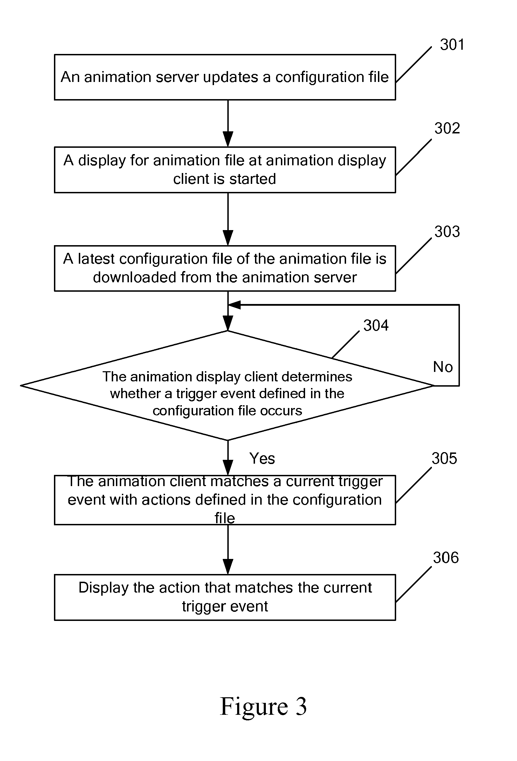

Figure 3 is a flowchart illustrating the second method for displaying animation of the present invention. With reference to Figure 3, the second method mainly includes the following processes.

According to process in block 301, an animation server updates a configuration file. That is, the animation server, according to various parameters in the previous running procedure of the animation file, updates a display processing logic in the configuration file.

According to processes in blocks 302∼303, a display for animation file at animation display client is started, and a latest configuration file of the animation file is downloaded from the animation server at the same time.

According to processes in block 304, the animation display client determines whether a trigger event defined in the configuration file occurs, if yes, the processes in block 305 is performed; otherwise, the processes in block 304 is performed again.

According to processes in blocks 305∼306, the animation client matches a current trigger event with actions defined in the configuration file, finds a first action that matches the current trigger event and displays the first action.

The second method for displaying animation of the present invention will be described in detail hereinafter with reference a specific embodiment.

It is supposed that the animation file in this specific embodiment is an electronic pet running on a computer. All actions of the electric pet are presented via Flash animation, an animation display client is an electronic pet system and an animation storage server is an electronic pet server. Animation file of the electronic pet is stored in the electronic pet system and corresponding configuration file for the animation file is stored in the electronic pet server. Different positions of mouse on the electronic pet correspond to different action states of the electronic pet, and these different positions of the mouse are called a mouse hot area. There may be a plurality of trigger events triggering the animation actions, for example, the trigger event's status information includes mouse or cursor's position and status, or includes a certain computer program's running state, etc. The mouse's status can be left mouse down, left mouse up, mouse in animation file region, mouse out animation file region and so on. The left mouse up event is taken for example hereby. How the electronic pet responds to the left mouse up event to implement an animation action is described hereinafter.

In step A, according to various parameters of the animation file running in the electronic pet system, the electronic pet server updates the display processing logic in the configuration file. In the configuration file, the mouse's trigger event is defined to be a left mouse up event. The configuration file specifies a plurality of mouse hot area positions for the left mouse up event. And all mouse hot areas are corresponding to different actions of the electronic pet.

In step B, the electronic pet system is started and run on the computer, downloads the configuration file from electronic pet server, and sends the configuration file to the computer.

In step C, when the electronic pet system is running, if the left mouse up event happens, the electronic pet system receives a message including the mouse's position from Windows operating system. The electronic pet system matches the multiple mouse hot areas defined in the configuration file with the mouse's position received. Once the mouse's position matches a mouse hot area, the electronic pet system displays the pet's action in this mouse hot area defined in the configuration file.

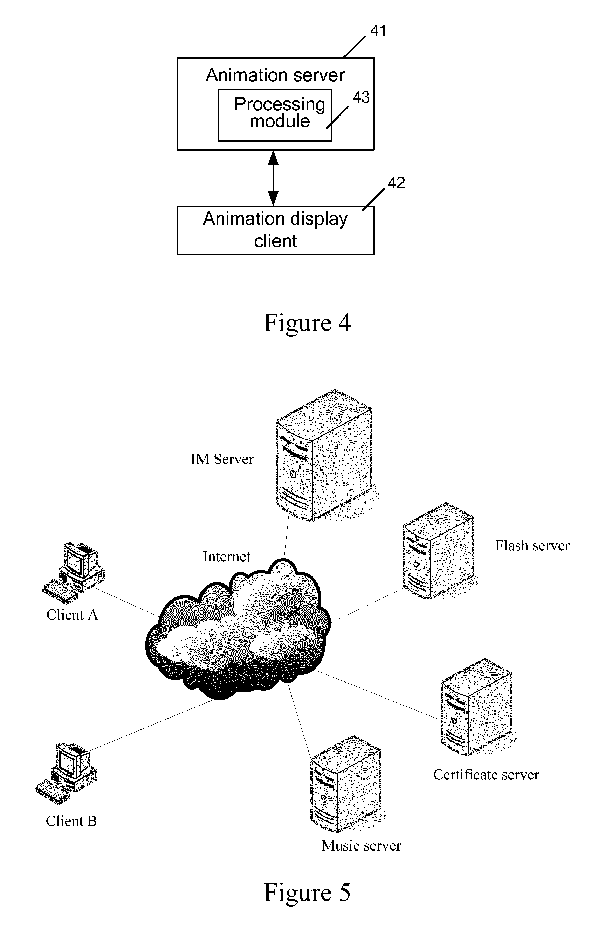

Corresponding to the second method for displaying animation of the present invention, the present invention also discloses an animation display system, and Figure 4 is a diagram illustrating the structure of the animation display system. With reference to Figure 4, the animation display system includes an animation display client 42 and an animation server 41. And the animation server 41 further includes a processing module 43 for controlling displaying of the animation file action. The processing module 43 has the above mentioned configuration file corresponding to the animation file. The animation display client 42 downloads the processing module 43 from the animation server 41, and displays the animation file according to definition and trigger event in the processing module 43.

In the third method for displaying animation of the present invention, playing of animation file and online music service are combined. The ordering and sending music become more vivid by using the animation.

Taking virtual pet animation in laptop virtual system based on instant messenger as an example, the following embodiment describes the third method for displaying animation of the present invention.

As mentioned above, the virtual pet is a virtual pet game running on user's computer laptop. And all actions of the virtual pet are presented by Flash animation. The pet's actions are divided into a number of detailed Flash animations. And, according to various system parameters of the pet, the detailed Flash animations can be assembled to present the virtual pet's whole living and life.

Figure 5 is a diagram illustrating structure of network providing online music service and virtual pet games. With reference to Figure 5, the network includes an IM server, a music server, a Flash server and a certificate server. These servers are connected through internet, and can be located either concentratively or separately.

The IM server is used for storing instant messenger user's information and providing communication service for the instant messenger user.

The music server is used for providing online music, and storing music files for the client to download. The music server also provides an interface for obtaining a playing duration of a specified music, so that the client can call this interface to obtain the time for playing the music.

The certificate server is used for controlling an authorization of digital right to play the music.

The Flash server is used for providing animation files for creating the pet and the pet's performing actions. And the client can download specified animation file from this Flash server.

Owner of virtual pet can select a path of the music to be played via the instant messenger system, and send the path together with a dialogue message to a friend's client. The friend's client obtains the virtual pet's animation file, plays the singing actions, and calls a music player to get music from the music server according to the path and play the music. Then the virtual pet can sing for the friend. The player can perform charging, authorization and other verification control via a built-in Digital Right Management (DRM) mechanism.

In order to make the virtual pet perform actions, like singing action, which are consistent with the music being played, it is applicable to combine and determine the flash animation by obtaining duration of the music being played, figure out the times of repeating the singing action, and play the virtual pet's singing action according to the times. The times are figured out according to the time for playing the singing action once and the time for playing the whole music.

In order to make the virtual pet have better animation performance, it is applicable to play a preliminary animation in advance, such as an animation of the virtual pet holding up the microphone, to repeatedly play the singing action during the music, and to play an ending animation when the music is over. The ending animation can be an animation of the virtual pet putting down the microphone etc.

The flash animation of the present invention includes a start action part, a middle action part and an end action part. The middle action part is used to repeat the playing of the song, which make the flash animation applicable to songs with different durations. The start part is a preliminary animation, and the end part is an ending animation. For example, a 3-minutes song can be played with a start action part once, a middle action part for 10 times and an end action part once; a 6-minutes song can be played with a start action part once, a middle action part for 20 times and an end action part once.

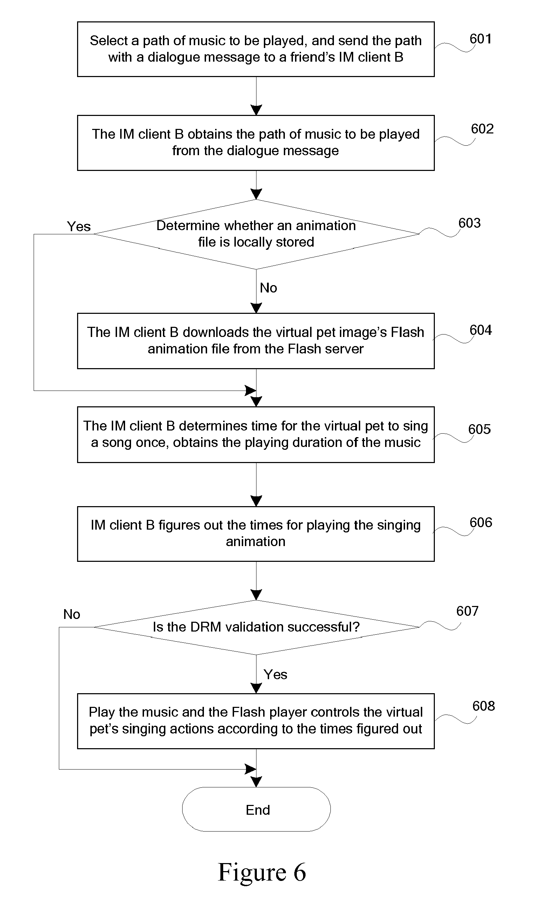

Figure 6 is a flowchart illustrating the third second method for displaying animation of the present invention. With reference to Figure 6, the processes of a virtual pet singing on an instant messenger system's client are as follows.

According to processes in block 601, an owner of a virtual pet selects a path of music to be played, and sends the path with a dialogue message to a friend's IM client B via an IM client A. The dialogue message further includes an animation file name and an MD5 validation signature.

According to processes in block 602, the IM client B obtains the path of music to be played from the dialogue message.

According to processes in block 603, the IM client B determines whether an animation file identified by an identity in the dialogue message is locally stored; if yes, the processes in block 605 is performed; otherwise, the processes in block 604 is performed. The animation file is a virtual pet image's Flash animation specifically,

Specifically, the IM client B determines whether the animation file is locally stored according to the animation file's file name in an instant notify message and the MD5 validation signature.

According to processes in block 604, the IM client B downloads the animation file identified by the identity in the dialogue message from the Flash server, that is, the IM client B downloads the virtual pet image's Flash animation file.

According to processes in block 605, the IM client B determines a playing duration of the animation file, that is the time for the virtual pet to sing a song once, and that is the duration of the middle action part. The IM client B obtains the playing duration of the music by calling the interface provided by the music server.

According to processes in block 606, the IM client B figures out the times for playing the singing animation based on the playing duration of the music and the time for the virtual pet to sing a song once.

According to processes in block 607, the IM client B downloads a specified music from the music server according to the path of music to be played, and performs a DRM verification; if the verification is successful, processes in block 608 is performed; otherwise, the processes are over.

According to processes in block 608, a Flash player is started to play the music and the Flash player controls the virtual pet's singing actions according to the times figured out. During the playing, it is applicable to play a start action part, that is an animation of the virtual pet is holding up the microphone, and then play a middle action part's singing action according to the times figured out, and finally play an animation of the virtual pet is putting down the microphone when the music is over, namely the end action part.

When the Flash player obtains the DRM certificate, in order to simple the validation, a certification address which is set when validation data packets are combined, can be directed to an identity validation server of Service Provider (SP), but not directly directed to a certificate server. That is a media player request the identity validation server for the certificate, the identity validation server requests the certificate server for the certificate upon validating the user's identity, and authorizes the user to perform further control process upon obtaining the certificate.

In the present invention, the cooperative playing of the virtual pet action and the online music service can also be triggered by the client's local user's order. The user selects identifier of the music to be played and identifier of corresponding virtual pet animation file at local client. Upon obtaining corresponding music and animation file, the user requests to play the obtained music and animation file locally, the detail processes hereby is similar to the processes in the blocks 606 to 608, and are not to be described in detail hereafter.

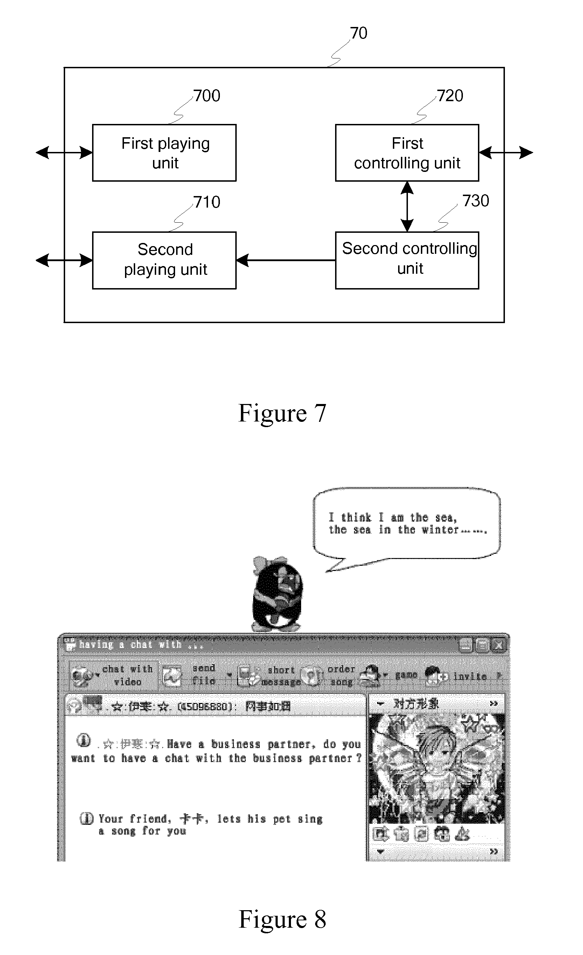

Figure 7 is a diagram illustrating structure of another animation display system of the present invention. With reference to Figure 7, an animation display system 70 provided by the present invention includes a first playing unit 700, a second playing unit 710, a first controlling unit 720 and a second controlling unit 730.

The first playing unit 700 is used for playing music and can be one of the existing media players.

The second playing unit 710 is used for playing an animation, that is, for creating a virtual pet which can performing actions consistent with the music. And the second playing unit 710 can be one of existing Flash players.

The first controlling unit 720 is used for obtaining a playing duration of music to be played and that of the animation file.

The second controlling unit 730 is logically connected to the second playing unit 710 and the first controlling unit 720. And the second controlling unit 730 is used for, according to the playing duration of the music obtained by the first controlling unit 720 and playing duration of the animation file, determining the times for playing performing actions. The second controlling unit 730 is also used for controlling the second playing unit 710 to play the virtual pet's performing actions according to the times.

According to the present invention, the virtual pet in the pet system can bring forth a function of ordering a song for a friend, the pet's owner can send his own pet to a friend's laptop or sing a song for a friend, and accordingly the online music's expression and the user's experience can be improved. Figure 8 is a diagram illustrating the singing of the virtual pet in the present invention. With reference to Figure 8, since the music has DRM validation mechanism, a virtual pet can conveniently use the music, which facilitates the use of the virtual pet.

Although described by taking the virtual pet animation for example as the above mentioned, the present invention is not limited to the above mentioned description. The animation file can be varied according to context requirement, and the implementing processes thereof are of similar principle and not to be described hereinafter.

Any modification, equivalent replacement or improvement made under the spirit and principles of the present invention is included in the scope of the claims of the present invention.

## Claims

1. A method for displaying animation, **characterised in** the processes of:
if an action animation is not attached to a background animation, moving the action animation to make the action animation attached to the background animation after a preset period of time;
if the action animation is attached to the background animation, moving the action animation accordingly to keep position where the action animation is attached to the background animation unchanged when the background animation is moved.

2. The method according to Claim 1, **characterised in, that** the moving the action animation accordingly to keep position where the action animation is attached to the background animation unchanged when the background animation is moved comprises:
sending, by the background animation, a message to a upper hierarchy window;
figuring out, by the upper hierarchy window, a current position of the background animation according to the message; and
moving the action animation to keep the position where the action animation is attached to the background animation unchanged, according to the current position and the position where the action animation is attached to the background animation before the background animation is moved.

3. The method according to Claim 1 or Claim 2, **characterised in, that** the moving the action animation to make the action animation attached to the background animation comprises:
calling a window hide function to make an action animation window disappear;
calling a window move function to move the action animation window to a position of a background animation window; and
calling a window display function to display the action animation window.

4. The method according to Claim 1 or Claim 2, **characterised in** transparentizing the action animation and the background animation.

5. The method according to Claim 1 or Claim 2, **characterised in** determining whether the action animation is attached to a background animation according to a position of action animation window, a position of animation background window position and a non-background area.

6. The method according to Claim 1, **characterised in** further comprising:
setting an animation file and a configuration file separately;
downloading the configuration file;
displaying the animation file according to the configuration file and a trigger event.

7. The method according to Claim 6, **characterised in that** the configuration file comprises a display processing logic for the animation file.

8. The method according to Claim 6, **characterised in that** the animation file is set in an animation display client and the configuration file is set in an animation server.

9. The method according to Claim 8, **characterised in** updating the configuration file.

10. The method according to Claim 8, **characterised in that** the downloading the configuration file comprises:
when the animation display client is starting, downloading from the animation server the latest configuration file to the animation display client.

11. The method according to Claim 10, **characterised in that** the latest configuration file is updated by the animation server according to various parameters in a previous running procedure of the animation file.

12. The method according to Claim 8, **characterised in** determining by the animation display client whether there is any trigger event, if there is the trigger event, displaying the animation file according to the configuration file and a trigger event.

13. The method according to Claim 8, **characterised in that** status information of the trigger event comprises: a position and status of the animation display client computer's mouse or cursor, or a computer program's running status of the animation display client.

14. The method according to Claim 6, **characterised in** matching the trigger event with the animation file defined in the configuration file and, and displaying the animation file matched.

15. A system for displaying animation, **characterised in**, comprising:
an animation server, including a processing module configured to control displaying of animation files; and
an animation display client, configured to download the processing module from the animation server and display the animation files according to definition in the processing module and a trigger event.
